# EUROPEAN PATENT APPLICATION

(11) **EP 4 389 588 A1**
(43) Date of publication of application: **26.06.2024**
(21) Application number: 23202929.8
(22) Date of filing: 11.10.2023
(51) Int. Cl.: B63H 20/00, B63H 20/28, F01P 3/20

(54) **OUTBOARD MOTOR**

(30) Priority: 23.12.2022 JP 2022206222
(71) Applicant: Yamaha Hatsudoki Kabushiki Kaisha, Iwata-shi, Shizuoka 438-8501 (JP)
(72) Inventor: Okabe, Yoshihiko, Iwata-shi, Shizuoka, 438-8501 (JP)
(74) Representative: Grünecker Patent- und Rechtsanwälte PartG mbB

(57) **Abstract**

The outboard motor 100 includes an electric motor 120, the drive shaft 130 rotationally driven by the electric motor 120, the propeller 141, the propeller shaft 140 rotating together with the propeller 141, the gear mechanism 180 that transmits rotation of the drive shaft 130 to the propeller shaft 140, the cooling water flow path 200 through which cooling water flows, and the water pump 210 that pumps the cooling water into the cooling water flow path 200, wherein the water pump 210 includes an impeller 211 and a pump shaft 212 that rotates together with the impeller 211, and the pump shaft 212 is arranged to be coaxial with the propeller shaft 140 and connected so as to rotate together with the propeller shaft 140.

## Description

The present invention relates to an outboard motor and a boat with an outboard motor.

Generally, outboard motors are equipped with a water pump for pumping cooling water to cool the engine. The water pump consists of an impeller or the like attached to a drive shaft. When the engine is driven, the impeller rotates together with the rotation of the drive shaft, and cooling water is pumped into the engine (see JP 2015-145137 A).

In the water pump of the above configuration, the impeller is attached to the drive shaft and driven by the rotation of the drive shaft, which restricts the installation position of the water pump and reduces the design flexibility.

It is the object of the present invention to provide an outboard motor that can prevent restriction of the installation position of the water pump and reduction of the design flexibility. According to the present invention said object is solved by an outboard motor having the features of independent claim 1. Preferred embodiments are laid down in the dependent claims.

An outboard motor according to an aspect of the present disclosure is an outboard motor to be mounted on a hull, the outboard motor including: a drive unit; a drive shaft rotationally driven by the drive unit; a propeller; a propeller shaft rotating together with the propeller; a transmission mechanism that transmits rotation of the drive shaft to the propeller shaft; a cooling water flow path through which cooling water flows; and a water pump that pumps the cooling water into the cooling water flow path, wherein the water pump includes an impeller and a pump shaft that rotates together with the impeller, and the pump shaft is arranged to be coaxial with the propeller shaft and connected so as to rotate together with the propeller shaft.

According to the above configuration, the water pump is driven by the transmission of rotation of the propeller shaft, which allows the water pump to be installed near the propeller shaft, where there is more space than around the drive shaft, thereby increasing design flexibility.

In the outboard motor, the drive shaft may be rotatable in both the forward direction (first rotation direction) and the reverse direction (second rotation direction), which is opposite to the forward direction, and the water pump may be a non-volumetric pump.

The drive shaft, which can rotate in both forward and reverse directions, eliminates the need for a clutch mechanism such as a dog clutch, thereby providing a further large space around the propeller shaft. This space can be used to accommodate the water pump, eliminating the need for a larger outboard motor and optimizing the arrangement of the components necessary to transport cooling water. In addition, since the non-volumetric pump has no restriction on the direction of rotation, it is suitable as a pump connected to a drive shaft that can rotate in both the forward and reverse directions.

In the outboard motor, the drive unit may be an electric motor driven by electricity supplied from a power source.

In the outboard motor, the water pump may be a centrifugal pump.

In the outboard motor, the pump shaft may be detachably connected to the propeller shaft.

According to such a configuration, the pump shaft can be detached from the propeller shaft for maintenance, which facilitates maintenance work.

In the outboard motor, the outboard motor may further include a joint member connecting the propeller shaft and the pump shaft, the propeller shaft may include a first coupling portion, the pump shaft may include a second coupling portion, and the joint member may include a first coupling receiving portion coupled to the first coupling portion and a second coupling receiving portion coupled to the second coupling portion.

According to this configuration, when a vibration or bending load is applied to the propeller shaft, the vibration or load is mainly received by the joint member, thereby reducing the load on the pump shaft.

In the outboard motor, the first coupling portion and the second coupling portion may have an approximately equal shape, and the first coupling receiving portion and the second coupling receiving portion may have an approximately equal shape.

According to this configuration, the propeller shaft and the pump shaft can be assembled to the joint member without paying attention to the orientation of the joint member, thereby facilitating the assembly work.

In the outboard motor, one of the first coupling portion and the first coupling receiving portion may be a first spline shaft extending along the rotation axis of the propeller shaft, and the other may be a first spline hole receiving the first spline shaft, and one of the second coupling portion and the second coupling receiving portion may be a second spline shaft extending along the rotation axis of the pump shaft, and the other may be a second spline hole receiving the second spline shaft.

This configuration allows the pump shaft to be detachably connected to and rotate together with the propeller shaft.

In the outboard motor, the propeller shaft may include the first spline shaft, the pump shaft may include the second spline shaft, and the joint member may include the first spline hole and the second spline hole.

The arrangement of the spline holes, which are more difficult to machine than the spline shaft, in the joint member, which is a separate member from the propeller shaft and the pump shaft and can be smaller and shorter than the propeller shaft and the pump shaft, facilitates manufacturing.

In the outboard motor, the joint member may include a spline hole extending the entire length between the two ends, the portion of the spline hole adjacent to one end may be the first spline hole, and the portion of the spline hole adjacent to the other end may be the second spline hole.

This configuration simplifies the joint member to facilitate the manufacturing process.

In the outboard motor, one of the propeller shaft and the pump shaft may include a third coupling portion, and the other may include a third coupling receiving portion that is coupled to the third coupling portion.

According to this configuration, the pump shaft is directly connected to the propeller shaft, thereby avoiding an increase in the number of parts and avoiding a complicated manufacturing process.

In the outboard motor, one of the third coupling portion and the third coupling receiving portion may be a third spline shaft extending along the rotation axis of the propeller shaft, and the other may be a third spline hole receiving the third spline shaft.

This configuration allows the pump shaft to be detachably connected to and rotate together with the propeller shaft.

In the outboard motor, the pump shaft may include a third spline shaft, and the propeller shaft may include a third spline hole.

Generally, the propeller shaft is thicker than the pump shaft because it carries a greater load than the pump shaft. Therefore, it is easier to form the third spline hole in the propeller shaft than to form the third spline hole in the pump shaft, thereby avoiding a complicated manufacturing process.

An outboard motor according to another aspect of the present disclosure is an outboard motor to be mounted on a hull, the outboard motor including: a drive unit; a drive shaft rotationally driven by the drive unit; a propeller; a propeller shaft rotating together with the propeller; a transmission mechanism that transmits the rotation of the drive shaft to the propeller shaft; a cooling water flow path through which cooling water flows; and a water pump that pumps the cooling water into the cooling water flow path, wherein the water pump includes an impeller and a pump shaft that rotates together with the impeller, and the pump shaft is rotated by transmitting the rotation of the propeller shaft.

In the above configuration, the water pump is driven by transmitting the rotation of the propeller shaft, which allows the water pump to be installed near the propeller shaft where there is more space than around the drive shaft, thereby increasing design flexibility.

The technology disclosed herein provides an outboard motor with high flexibility in water pump design.

### BRIEF DESCRIPTION OF THE DRAWINGS

FIG. 1 is a perspective view schematically illustrating a configuration of a boat according to Embodiment 1.
FIG. 2 is a side view schematically illustrating a configuration of an outboard motor according to Embodiment 1.
FIG. 3 is a partially enlarged cross-sectional view of the outboard motor of Embodiment 1, showing a partially enlarged cross-section cut at the position indicated by line III-III in FIG. 1.
FIG. 4 is an enlarged cross-sectional view of the part indicated by frame F in FIG. 3.
FIG. 5 is a partially enlarged cross-sectional view of the outboard motor of Embodiment 2, showing the same area as in FIG. 4 enlarged.

### DETAILED DESCRIPTION OF THE PREFERRED EMBODIMENTS

Specific examples of the technology disclosed by this specification are described below with reference to the drawings.

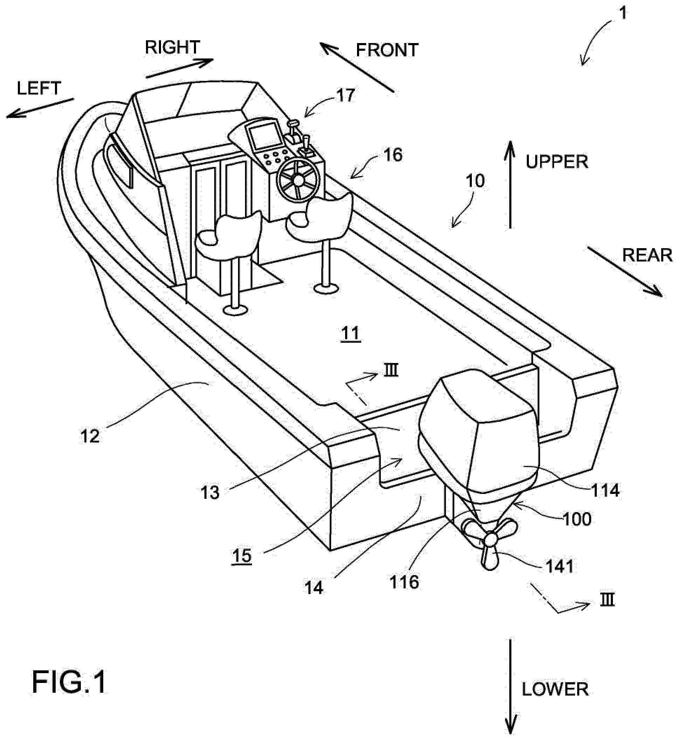

Embodiment 1 will be described with reference to FIGS. 1 to 4. A boat 1 of Embodiment 1 is equipped with a hull 10 and an outboard motor 100, as shown in FIG. 1.

FIG. 1 and the other drawings to follow show arrows representing each direction with respect to the position of the boat 1. More specifically, each drawing shows arrows representing front (FRONT), rear (REAR), left (LEFT), right (RIGHT), upper (UPPER), and lower (LOWER) directions. The front-rear, left-right, and upper-lower (vertical) directions are orthogonal to each other.

The hull 10 is a part of the boat 1 for occupants to ride. As shown in FIG. 1, the hull 10 has a hull body 12 having a living space 11, a pilot seat 16 installed in the living space 11, and an operating device 17 installed near the pilot seat 16. The operating device 17 is a device for maneuvering the boat and includes, e.g., a steering wheel, a shift throttle lever, a joystick, a monitor, and an input device. The hull 10 also has a partition wall 13 that partitions the rear end of the living space 11 and a transom 14 positioned at the rear end of the hull 10. In the front-rear direction, there is a space 15 between the transom 14 and the partition wall 13.

The outboard motor 100 is a device that generates thrust to propel the boat 1. The outboard motor 100 in this embodiment is an electric outboard motor driven by an electric motor 120 (an example of a drive unit). The outboard motor 100 in the reference attitude will be described below unless otherwise specified. The reference attitude is the attitude of the outboard motor 100 when the boat 1 is cruising (attitude shown in FIG. 1), in which the rotation axis Ad of the drive shaft 130 (described below) extends in the upper-lower direction and the rotation axis Apr of the propeller shaft 140 extends in the front-rear direction. The front-rear direction, the left-right direction, and the upper-lower direction are defined based on the outboard motor 100 in the reference attitude.

As shown in FIG. 1, the outboard motor 100 is attached to the transom 14 located at the rear (stern) of the hull 10. The outboard motor 100 has an outboard motor main body 110 and a suspension device 150.

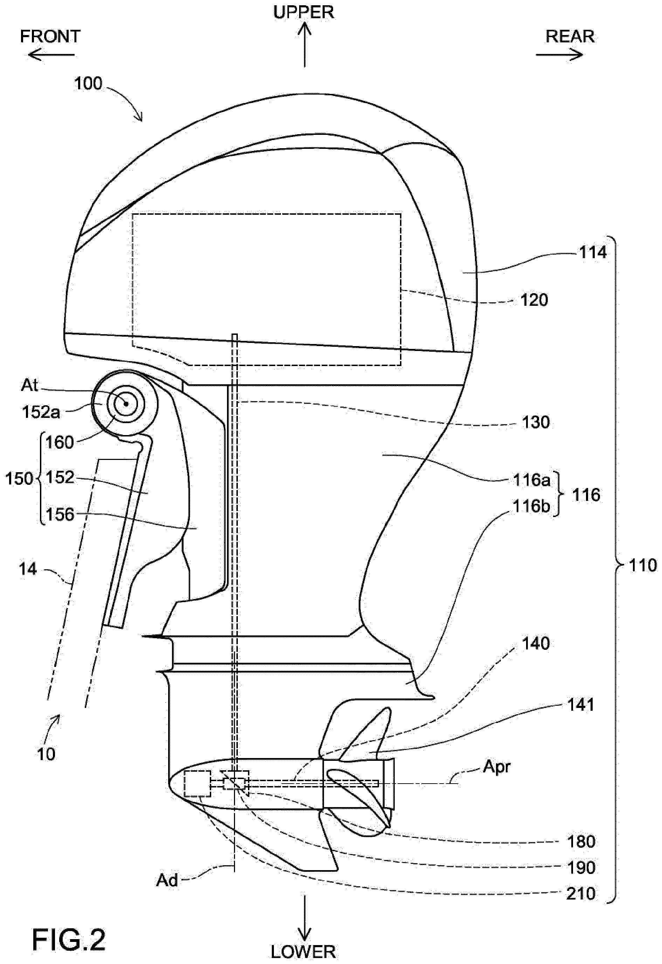

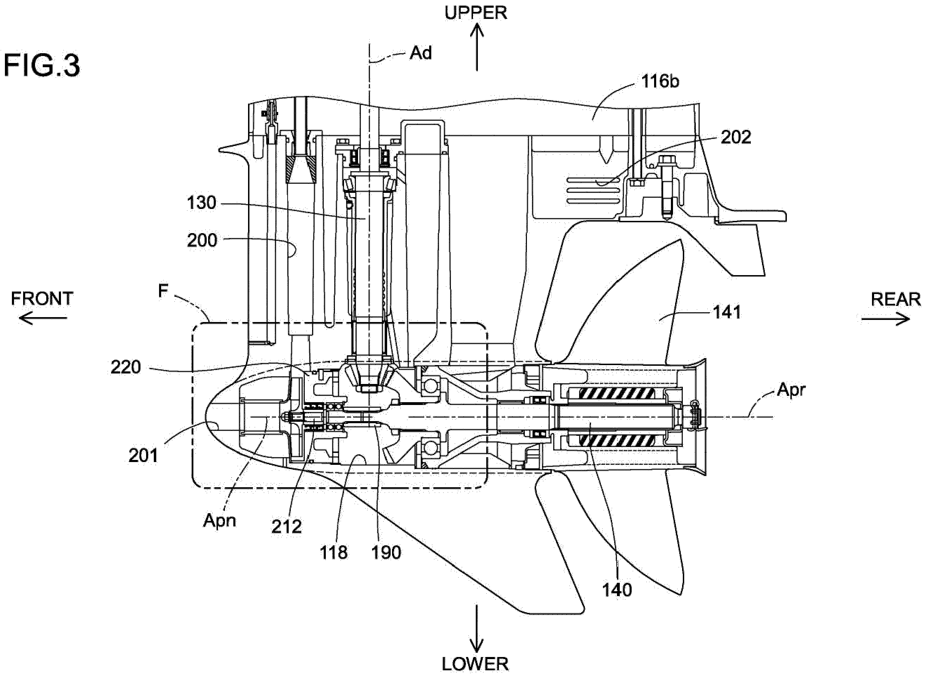

As shown in FIGS. 2 and 3, the outboard motor main body 110 includes a cowl 114, a casing 116, an electric motor 120, a drive shaft 130, a propeller 141, a propeller shaft 140, a cooling water flow path 200, a water pump 210, a gear mechanism 180 (an example of the transmission mechanism), and a joint member 190.

As shown in FIG. 2, the cowl 114 is a housing located on top of the outboard motor main body 110. The casing 116 includes an upper case 116a and a lower case 116b, as shown in FIG. 2. The upper case 116a is a housing located below the cowl 114. The lower case 116b is a housing located below the upper case 116a.

The lower case 116b has a gear chamber 118 that stores oil therein and houses the gear mechanism 180, as shown in FIG. 3.

The electric motor 120 is driven by electric power supplied from a battery (power source). The electric motor 120 includes a rotor including a permanent magnet, a stator including a coil to which the battery power is supplied, and a motor housing that houses the rotor and stator. The electric motor 120 is located inside the cowl 114. The battery may be located inside the cowl 114 or inside the hull 10.

The drive shaft 130 is a rod-shaped member extending downward from the electric motor 120 and housed within the casing 116, as shown in FIG. 2. The drive shaft 130 is arranged in an attitude in which its rotation axis Ad extends in the upper-lower direction.

The drive shaft 130 rotates around the rotation axis Ad by the rotational driving force of the electric motor 120. Since the electric motor 120 can rotate in both forward and reverse directions, the drive shaft 130 can also rotate around the rotation axis line Ad in both forward direction (first rotation direction) to move the boat 1 forward and reverse direction (second rotation direction) to move the boat 1 backward, which is opposite to the forward direction, according to the rotational driving direction of the electric motor 120.

The propeller 141 is a rotating body having a plurality of blades. The propeller 141 generates thrust by rotation.

The propeller shaft 140 is a rod-shaped member and extends in the front-rear direction inside the lower case 116b, as shown in FIGS. 2, 3, and 4. The propeller shaft 140 is rotatably supported by the lower case 116b via a bearing 142. The rear end of the propeller shaft 140 protrudes rearwardly from the lower case 116b, and the propeller 141 is attached to this rear end. As the propeller shaft 140 rotates around the rotation axis Apr, the propeller 141 also rotates.

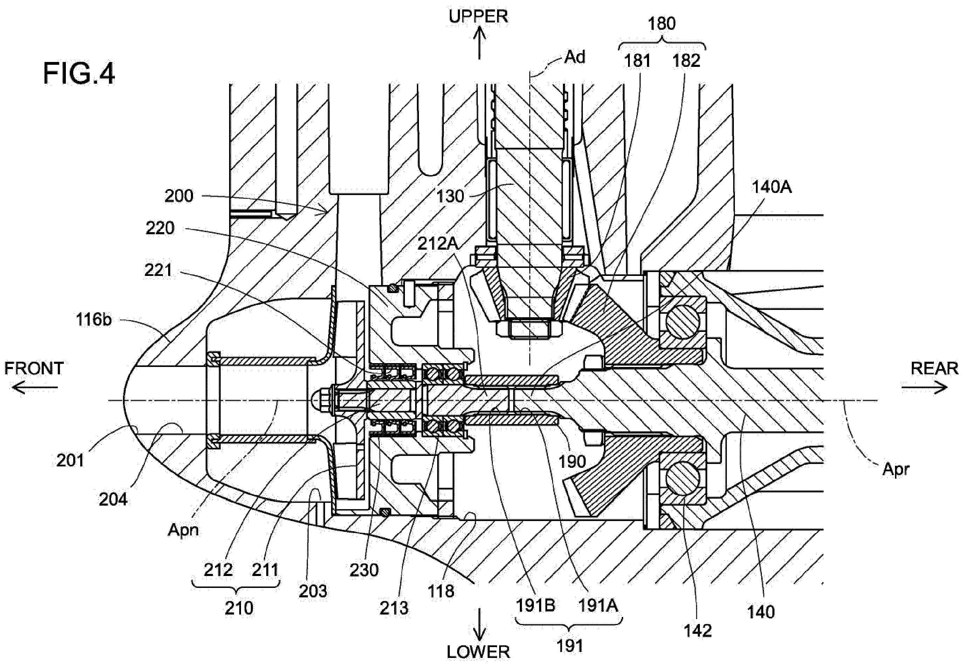

The front end of the propeller shaft 140 is a first spline shaft 140A (an example of the first coupling portion), as shown in FIG. 4. The first spline shaft 140A has a general configuration having a round rod-shaped shaft extending along the rotation axis Apr with a plurality of spline teeth on its outer surface.

The cooling water flow path 200 is located inside the outboard motor main body 110. The cooling water flow path 200 is a channel through which cooling water (seawater, lake water, and river water, among others) taken from outside the outboard motor 100 flows. The cooling water flow path 200 has an intake port 201 that opens on the outer surface of the lower case 116b for taking cooling water into the interior and a drain port 202 that also opens on the outer surface of the lower case 116b for discharging cooling water to the exterior; the cooling water flow path 200 extends from the intake port 201 through the periphery of the electric motor 120 to the drain port 202. The intake port 201 is located below the waterline when the boat 1 is cruising, i.e., when the outboard motor 100 is in the reference attitude. The intake port 201 is open at the front end of the lower case 116b.

As shown in FIG. 4, a portion of the cooling water flow path 200 is a pump chamber 203. The pump chamber 203 is located in front of the gear chamber 118 in the lower case 116b and is separated from the gear chamber 118 by a partition member 220. The partition member 220 has a shaft hole 221 that is connected to the pump chamber 203 and the gear chamber 118.

The water pump 210 is a non-volumetric pump having an impeller 211 and a pump shaft 212 that rotates together with the impeller 211, as shown in FIG. 4. In this embodiment, a centrifugal pump is exemplified as the water pump 210.

The impeller 211 is a rotating body having a plurality of blades and is located inside the pump chamber 203. The pump shaft 212 is a rod-shaped member and extends in a front-rear direction. The pump shaft 212 is inserted into the shaft hole 221 and is supported by the partition member 220 in a rotatable manner via a bearing 213. The rotation axis Apn of the pump shaft 212 coincides with the rotation axis Apr of the propeller shaft 140. The front end of the pump shaft 212 is located inside the pump chamber 203, where the impeller 211 is mounted. In other words, the water pump 210 (specifically, the pump shaft 212 and impeller 211) is located on the rotation axis Apr of the propeller shaft 140. As the pump shaft 212 rotates around the rotation axis Apn, the impeller 211 also rotates.

The rear end of the pump shaft 212 is a second spline shaft 212A (an example of the second coupling portion) that is arranged inside the gear chamber 118. The second spline shaft 212A has a general configuration having a round rod-shaped shaft extending along the rotation axis Apn with a plurality of spline teeth on its outer surface. The second spline shaft 212A has a shape that is approximately equal to that of the first spline shaft 140A. In other words, the outer diameter, length, and spline tooth arrangement and shape of the second spline shaft 212A and the first spline shaft 140A are approximately identical.

The portion of the cooling water flow path 200 from the intake port 201 to the water pump 210, i.e., the portion located between the intake port 201 and the pump chamber 203 (inlet channel 204), is located in front of the water pump 210 and extends along the rotation axis Apn of the pump shaft 212, as shown in FIG. 4.

Inside the shaft hole 221, as shown in FIG. 4, a plurality of seal members 230 are arranged on the outer surface of the pump shaft 212 to fill the gap between the inner surface of the shaft hole 221 and the pump shaft 212. Each seal member 230 is circular in shape, is composed of a material such as rubber having rubber elasticity, and encircles the pump shaft 212 all the way around. The plurality of seal members 230 are arranged in line along the rotation axis Apn of the pump shaft 212. These seal members 230 prevent cooling water flowing into the pump chamber 203 from entering the gear chamber 118 through the gap between the inner circumferential surface of the shaft hole 221 and the pump shaft 212.

The gear mechanism 180 is a mechanism for transmitting the rotation of the drive shaft 130 to the propeller shaft 140.

The gear mechanism 180 has a first gear 181 and a second gear 182, as shown in FIG. 4. The first gear 181 is coaxially mounted to the drive shaft 130 and rotates together with the drive shaft 130. The second gear 182 is coaxially mounted to the propeller shaft 140 and rotates together with the propeller shaft 140. The second gear 182 meshes with the first gear 181. The first gear 181 and the second gear 182 are, e.g., bevel gears.

The gear mechanism 180 is located inside the gear chamber 118. The two gears 181 and 182 are lubricated by oil provided inside the gear chamber 118.

As described above, the drive shaft 130, which is rotationally driven by the electric motor 120, is capable of rotating in both forward and reverse directions, thereby eliminating the need for a clutch mechanism, such as a dog clutch, to switch the direction of rotation of the propeller shaft 140. Therefore, there is a relatively large space around the propeller shaft 140 in the lower case 116b, and this space can be used to accommodate the water pump 210 and gear mechanism 180. This optimizes the arrangement of the components necessary to transport cooling water while avoiding increasing the size of the outboard motor 100. The space can also accommodate the length of the pump shaft 212 necessary to position the multiple seal members 230, which reliably prevents cooling water from entering the gear chamber 118.

The Joint member 190 is a member that engages with the first spline shaft 140A and the second spline shaft 212A and connects the propeller shaft 140 and the pump shaft 212.

The joint member 190 is cylindrical with openings at both ends and has a spline hole 191 extending from one end to the other. The spline holes 191 have a general configuration with a plurality of spline grooves arranged on the inner surface. In the spline holes 191, the portion adjacent to one end of the joint member 190 (right end of FIG. 4) is the first spline hole 191A (first coupling receiving portion) that receives the first spline shaft 140A, and the portion adjacent to the other end of the joint member 190 (left end of FIG. 4) is the second spline hole 191B (second coupling receiving portion) that receives the second spline shaft 212A. The first spline hole 191A and the second spline hole 191B are one end and the other end of one spline hole 191, and have a shape that is approximately equal to each other. In other words, the first spline hole 191A and the second spline hole 191B are equal in inner diameter and spline groove arrangement.

The first spline shaft 140A is fitted into the first spline hole 191A, and each spline tooth of the first spline shaft 140A meshes with each spline groove of the first spline hole 191A. The second spline shaft 212A is fitted into the second spline hole 191B, and each spline tooth on the second spline shaft 212A meshes with each spline groove on the second spline hole 191B. As a result, the propeller shaft 140, joint member 190, and pump shaft 212 rotate together. In other words, the pump shaft 212 is connected to the propeller shaft 140 via the joint member 190 so that they rotate together. The pump shaft 212 is arranged to be coaxial with the propeller shaft 140.

By using one end and the other end of the single spline hole 191 as the first spline hole 191A and the second spline hole 191B, the joint member 190 can have a simple shape, and the manufacturing process can be simplified. Furthermore, the arrangement of the spline hole 191, which is more difficult to machine than the spline shafts 140A and 212A, in the joint member 190, which is a separate member from the propeller shaft 140 and pump shaft 212 and can be smaller and shorter than the propeller shaft 140 and pump shaft 212, facilitates manufacturing.

In addition, since the first spline shaft 140A and the second spline shaft 212A have an approximately equal shape, and the first spline hole 191A and the second spline hole 191B have an approximately equal shape, when connecting the pump shaft 212 and the propeller shaft 140 with the joint member 190, the joint member 190 can be assembled without paying attention to the orientation of the joint member 190, thus facilitating the assembly work.

The pump shaft 212 is assembled to the propeller shaft 140 such that the pump shaft 212 can be attached to and detached from the propeller shaft 140 by inserting/removing the first spline shaft 140A into/from the first spline hole 191A and inserting/removing the second spline shaft 212A into/from the second spline hole 191B. This allows the pump shaft 212 to be removed from the propeller shaft 140 for maintenance, thereby facilitating maintenance work.

The suspension device 150 is a device for suspending the outboard motor main body 110 on the hull 10. The suspension device 150 includes a pair of left and right clamp brackets 152, a tilt shaft 160, and a connection bracket 156, as shown in FIG. 2.

The pair of left and right clamp brackets 152 are disposed behind the hull 10 in a state separated from each other in the left-right direction and are fixed to the transom 14 of the hull 10 by using, e.g., bolts. Each clamp bracket 152 has a cylindrical supporting portion 152a provided with a through-hole extending in the left-right directions.

The tilt shaft 160 is a rod-shaped member. The tilt shaft 160 is rotatably supported in the through-hole of the supporting portion 152a of the clamp bracket 152. The tilt axis At, which is the center line of the tilt shaft 160, constitutes an axis in the horizontal direction (left-right direction) in the tilting action of the outboard motor 100.

The connection bracket 156 is disposed so as to be sandwiched between the pair of clamp brackets 152 and is supported by the supporting portion 152a of the clamp bracket 152 via the tilt shaft 160 in such a manner that the connection bracket 156 can rotate around the tilt axis At. The connection bracket 156 is fixed to the outboard motor main body 110. The connection bracket 156 is rotationally driven around the tilt axis At with respect to the clamp bracket 152 by a tilt device (not shown) including an actuator such as, e.g., a hydraulic cylinder.

When the connection bracket 156 rotates about the tilt axis At with respect to the clamp bracket 152, the outboard motor main body 110 fixed to the connection bracket 156 also rotates about the tilt axis At. This achieves the tilting action of rotating the outboard motor main body 110 in the upper-lower direction with respect to the hull 10. By this tilting action, the outboard motor 100 can change the angle around the tilt axis At of the outboard motor main body 110 in the range from the tilt-down state in which the propeller 141 is located under the waterline (the state in which the outboard motor 100 is in the reference attitude: the state shown in FIG. 1) to the tilt-up state in which the propeller 141 is above the waterline. Trimming action to adjust the attitude of the boat 1 during cruising can also be performed by adjusting the angle around the tilt axis At of the outboard motor main body 110.

When the boat 1 is cruising, the outboard motor 100 is placed in the tilt-down state, and the lower case 116b and the propeller 141 are positioned below the waterline. The intake port 201, inlet channel 204, pump chamber 203, and water pump 210 located inside the lower case 116b are also below the waterline, and cooling water flows into the pump chamber 203 from outside through the intake port 201 and inlet channel 204.

When the electric motor 120 is driven, the drive shaft 130 rotates around the rotation axis Ad by the rotational driving force of the electric motor 120.

The rotation of the drive shaft 130 is transmitted to the propeller shaft 140 via the gear mechanism 180. When the gear mechanism 180 transmits the forward rotation of the drive shaft 130 to the propeller shaft 140, the propeller 141 rotating together with the propeller shaft 140 generates thrust in the forward direction. When the gear mechanism 180 transmits the reverse rotation of the drive shaft 130 to the propeller shaft 140, the propeller 141 rotating together with the propeller shaft 140 generates thrust in the backward direction.

The joint member 190 rotates as the drive shaft 130 rotates, and the pump shaft 212 also rotates. In other words, the rotation of the drive shaft 130 is transmitted to the propeller shaft 140 by the gear mechanism 180 and from the propeller shaft 140 to the pump shaft 212 via the joint member 190. Then, the impeller 211 rotates together with the pump shaft 212. Cooling water taken in from the intake port 201 is pumped through the cooling water flow path 200 by centrifugal force generated by the rotation of the impeller 211, and is supplied around the electric motor 120 to cool the electric motor 120. In addition to the electric motor 120, the cooling water may also cool the battery, inverter, and reduction gears, among others, located inside the outboard motor main body 110. After being used for cooling, the cooling water is discharged to the outside through the drain port 202.

As the propeller shaft 140 rotates in both the forward and reverse directions, the pump shaft 212 also rotates around the rotation axis Apn in both the direction of rotation associated with the forward rotation of the propeller shaft 140 and the direction of rotation associated with the reverse rotation of the propeller shaft 140; the water pump 210, which is a non-volumetric pump with no restriction on direction of rotation, operates normally no matter which direction the propeller shaft 140 rotates.

Thus, the pump shaft 212 is connected to the propeller shaft 140 so that they rotate together. The rotation of the drive shaft 130 is transmitted through the gear mechanism 180 to the propeller shaft 140 and then through the joint member 190 to the pump shaft 212 to drive the water pump 210. According to this configuration, the water pump 210 is driven by the transmission of the rotation of the propeller shaft 140, which allows the water pump 210 to be installed near the propeller shaft 140, where there is more space than around the drive shaft 130, thereby increasing design flexibility.

In addition, the propeller shaft 140 is connected to the pump shaft 212 via the joint member 190. According to this configuration, when a vibration or bending load is applied to the propeller shaft 140, the vibration or load is mainly received by the joint member 190, thereby reducing the load on the pump shaft 212.

As the drive shaft 130 rotates in both the forward and reverse directions, the pump shaft 212 also rotates around the rotation axis Apn in both the direction of rotation associated with the forward direction of the drive shaft 130 and the direction of rotation associated with the reverse direction of the drive shaft 130; the water pump 210, which is a non-volumetric pump with no restriction on the direction of rotation, operates normally no matter which direction the drive shaft 130 rotates.

As described above, the outboard motor 100 of this embodiment is an outboard motor 100 mounted on the hull 10, including the electric motor 120, the drive shaft 130 rotationally driven by the electric motor 120, the propeller 141, the propeller shaft 140 rotating together with the propeller 141, the gear mechanism 180 that transmits rotation of the drive shaft 130 to the propeller shaft 140, the cooling water flow path 200 through which cooling water flows, and the water pump 210 that pumps the cooling water into the cooling water flow path 200, wherein the water pump 210 includes an impeller 211 and a pump shaft 212 that rotates together with the impeller 211, and the pump shaft 212 is arranged to be coaxial with the propeller shaft 140 and connected so as to rotate together with the propeller shaft 140.

According to the above configuration, the water pump 210 is driven by the transmission of the rotation of the propeller shaft 140, which allows the water pump 210 to be installed near the propeller shaft 140, where there is more space than around the drive shaft 130, thereby increasing design flexibility.

In addition, the drive shaft 130 can rotate in both the forward direction and the reverse direction, which is opposite to the forward direction, and the water pump 210 is a non-volumetric pump.

According to this configuration, the drive shaft 130, which can rotate in both forward and reverse directions, eliminates the need for a clutch mechanism such as a dog clutch to switch the direction of rotation of the propeller shaft 140, thereby providing a relatively large space around the propeller shaft 140. This space can be used to accommodate the water pump 210, avoiding increasing the size of the outboard motor 100 and optimizing the arrangement of the components necessary to transport cooling water. In addition, since the non-volumetric water pump 210 has no restrictions on the direction of rotation, it is suitable as a pump, the rotation of which is transmitted from the drive shaft 130 that can rotate in both forward and reverse directions.

The pump shaft 212 is detachably connected to the propeller shaft 140. According to this configuration, the pump shaft 212 can be detached from the propeller shaft 140 for maintenance, which facilitates maintenance work.

The outboard motor 100 is further provided with the joint member 190 connecting the propeller shaft 140 and the pump shaft 212, the propeller shaft 140 includes the first spline shaft 140A, the pump shaft 212 includes the second spline shaft 212A, and the joint member 190 includes a first spline hole 191A coupled to the first spline shaft 140A and a second spline hole 191B coupled to the second spline shaft 212A.

According to this configuration, when a vibration or bending load is applied to the propeller shaft 140, the vibration or load is mainly received by the joint member 190, thereby reducing the load on the pump shaft 212.

The first spline shaft 140A and the second spline shaft 212A may have an approximately equal shape, and the first spline hole 191A and the second spline hole 191B may have an approximately equal shape.

This configuration allows the pump shaft 212 to be detachably connected to and rotate together with the propeller shaft 140. In addition, the propeller shaft 140 and the pump shaft 212 can be assembled to the joint member 190 without paying attention to the orientation of the joint member 190, thereby facilitating the assembly work. Furthermore, the arrangement of the spline hole 191, which is more difficult to machine than the spline shafts 140A and 212A, in the joint member 190, which is a separate member from the propeller shaft 140 and pump shaft 212 and can be smaller and shorter than the propeller shaft 140 and pump shaft 212, facilitates manufacturing.

The joint member 190 has the spline holes 191 extending over the entire length between the two ends, with the portion of the spline hole 191 adjacent to one end being the first spline hole 191A and the portion of the spline hole 191 adjacent to the other end being the second spline hole 191B. This configuration simplifies the joint member 190 to facilitate the manufacturing process.

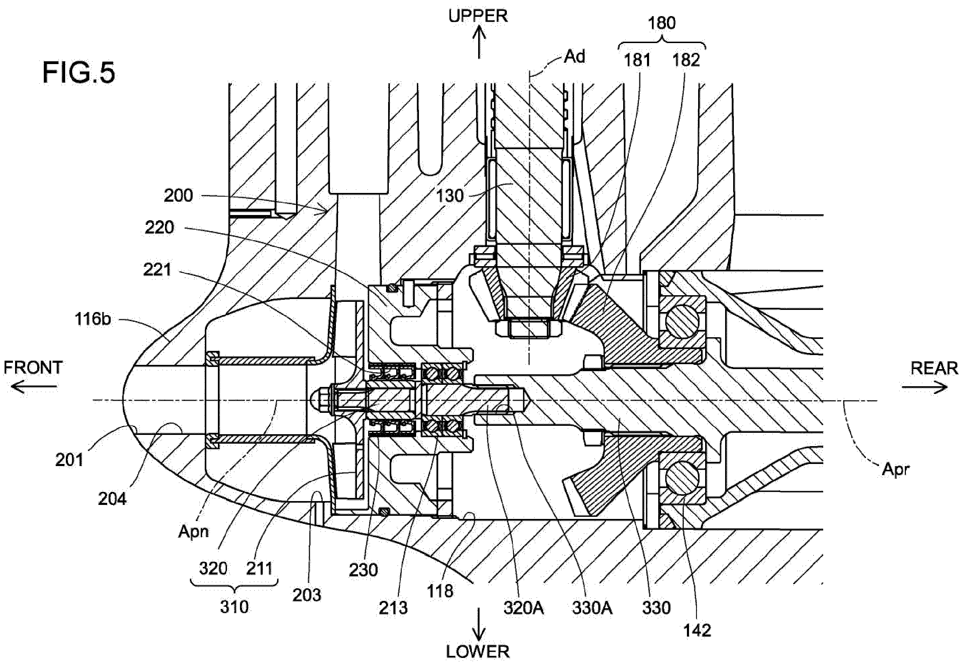

Embodiment 2 will be explained with reference to FIG. 5. The outboard motor in this embodiment differs from that of Embodiment 1 in that the pump shaft 320 is directly connected to the propeller shaft 330. In this embodiment, the same configuration as in Embodiment 1 will be marked with the same symbol, and the explanation will be omitted.

As in Embodiment 1, the propeller shaft 330 is a rod-shaped member and is rotatably supported by the lower case 116b via the bearing 142. The rear end of the propeller shaft 330 protrudes rearwardly from the lower case 116b, and the propeller 141 is attached to this rear end. As the propeller shaft 330 rotates around the rotation axis Apr, the propeller 141 also rotates.

The front end of the propeller shaft 330 is a third spline hole 330A (an example of the third coupling receiving portion). A plurality of spline grooves extending along the rotation axis Apr are arranged on the inner surface of the third spline hole 330A.

As in Embodiment 1, the water pump 310 is a non-volumetric pump having an impeller 211 and a pump shaft 320 that rotates together with the impeller 211. The pump shaft 320 is a rod-shaped member and extends along the rotation axis Apr of the propeller shaft 330. In other words, the pump shaft 320 is arranged to be coaxial with the propeller shaft 330. The rear end of the pump shaft 320 is the third spline shaft 320A (an example of the third coupling portion). The third spline shaft 320A is a round rod-shaped shaft extending along the rotation axis Apn and having a plurality of spline teeth on its outer surface.

The third spline shaft 320A is fitted into the third spline hole 330A, and each spline tooth of the third spline shaft 320A meshes with each spline groove of the third spline hole 330. This allows the pump shaft 320 to be detachably connected to and rotate together with the propeller shaft 330. The pump shaft 320 is arranged to be coaxial with the propeller shaft 140.

Rotation of the drive shaft 130 is transmitted to the propeller shaft 330 via the gear mechanism 180, causing the propeller shaft 330 to rotate, which is further transmitted to the pump shaft 320, causing the pump shaft 320 to rotate. This drives the water pump 310.

Thus, in this embodiment, the pump shaft 320 includes a third spline shaft 320A, and the propeller shaft 330 includes a third spline hole 330A that is coupled to the third spline shaft 320A.

According to this configuration, the pump shaft 320 is directly connected to the propeller shaft 330, thus avoiding an increase in the number of components and avoiding a complicated manufacturing process. In addition, this configuration allows the pump shaft 320 to be easily detachably connected to rotate together with the propeller shaft 330.

Furthermore, the propeller shaft 330 is thicker than the pump shaft 320 because it carries a greater load than the pump shaft 320. Therefore, in terms of the manufacturing process, it is easier and less complicated to form the third spline hole 330A on the propeller shaft 330 than on the pump shaft 320.
(1) In the above embodiment, as an example, the electric outboard motor 100 is driven by the electric motor 120, but the drive unit of the outboard motor does not have to be an electric motor and may be, e.g., an internal combustion engine.
(2) In the above embodiment, the drive shaft 130 is rotatable in both forward and reverse directions according to the rotational drive direction of the electric motor 120, but the outboard motor may include an internal combustion engine as a drive unit and a shift mechanism for switching the rotational direction of the drive shaft.
(3) In Embodiment 1, the propeller shaft 140 includes the first spline shaft 140A, and the joint member 190 includes the first spline hole 191A, but the propeller shaft may include the first spline hole, and the joint member may include the first spline shaft. Also, in Embodiment 1, the pump shaft 212 includes the second spline shaft 212A and the joint member 190 includes the second spline hole 191B, but the pump shaft may include the second spline hole and the joint member may include the second spline shaft.
(4) In Embodiment 1, the first spline shaft 140A and the second spline shaft 212A have an identical shape, but the first spline shaft and the second spline shaft may have different outer diameters and lengths. In that case, the first spline hole and the second spline hole may also have a shape corresponding to the first spline shaft and the second spline shaft, respectively.
(5) In Embodiment 1, the propeller shaft 140 and the joint member 190 are connected by fitting the first spline shaft 140A into the first spline hole 191A, but the connection between the propeller shaft and joint member is not limited to that by the spline shaft and spline hole and may also be implemented by a bolt and nut, for example. The same applies to the connection between the pump shaft and the joint member. The same also applies to the connection between the propeller shaft and pump shaft in Embodiment 2.
(6) In the above embodiment, the pump shafts 212 and 320 are detachably connected to the propeller shafts 140 and 330, but this connection may be made in a non-detachable manner, for example, the joint member and the propeller shaft or the joint member and the pump shaft may be connected by welding.
(7) In the above embodiment, a plurality of seal members 230 are attached to the pump shaft 212, but the number of seal members is freely selectable and may be, e.g., only one.

## Claims

1. An outboard motor (100) to be mounted on a hull (10), the outboard motor (100) comprising:
a drive unit (120);
a drive shaft (130) configured to by rotationally driven by the drive unit (120);
a propeller (141);
a propeller shaft (140) configured to rotate around a rotation axis (Apr) together with the propeller (141);
a transmission mechanism (180) configured to transmit rotation of the drive shaft (130) to the propeller shaft (140);
a cooling water flow path (200) configured for cooling water to flow through; and
a water pump (210) configured to pump the cooling water into the cooling water flow path (200), wherein
the water pump (210) comprises:
an impeller (211); and
a pump shaft (212) configured to rotate around a rotation axis (Apn) together with the impeller (211), and
the pump shaft (212) is rotatable by transmitting the rotation of the propeller shaft (140).

2. The outboard motor (100) according to claim 1, wherein the pump shaft (212) is arranged to be coaxial with the propeller shaft (140) and connected so as to be rotatable together with the propeller shaft (140).

3. The outboard motor (100) according to claim 1 or 2, wherein the drive shaft (130) is rotatable in both a first rotation direction and a second rotation direction, which is opposite to the first rotation direction, and
the water pump (210) is a non-volumetric pump.

4. The motor according to any one of claims 1 to 3, wherein the drive unit is an electric motor (120) configured to be driven by electric power supplied from a power source.

5. The outboard motor (100) according to any one of claims 1 to 4, wherein the water pump (210) is a centrifugal pump.

6. The outboard motor (100) according to any one of claims 1 to 5, wherein the pump shaft (212) is detachably connected to the propeller shaft (140).

7. The outboard motor (100) according to any one of claims 1 to 6, further comprising:
a joint member (190) connecting the propeller shaft (140) to the pump shaft (212),
wherein
the propeller shaft (140) comprises a first coupling portion (140A),
the pump shaft (212) comprises a second coupling portion (212A), and
the joint member (190) comprises a first coupling receiving portion (191A) coupled to the first coupling portion (140A) and a second coupling receiving portion (191B) coupled to the second coupling portion (212A).

8. The outboard motor (100) according to claim 7, wherein the first coupling portion (140A) and the second coupling portion (212A) have an equal shape, and the first coupling receiving portion (191A) and the second coupling receiving portion (191B) have an equal shape.

9. The outboard motor (100) according to claim 7 or 8, wherein one of the first coupling portion (140A) and the first coupling receiving portion (191A) is a first spline shaft (140A) extending along the rotation axis (Apr) of the propeller shaft (140), and the other is a first spline hole (191A) receiving the first spline shaft (140A), and
one of the second coupling portion (212A) and the second coupling receiving portion (191B) is a second spline shaft (121A) extending along the rotation axis (Apn) of the pump shaft (212), and the other is a second spline hole (191B) receiving the second spline shaft (121A).

10. The outboard motor (100) according to claim 9, wherein the propeller shaft (140) comprises the first spline shaft (140A),
the pump shaft (212) comprises the second spline shaft (121A), and
the joint member (190) comprises the first spline hole (191A) and the second spline hole (191B).

11. The outboard motor (100) according to claim 10, wherein the joint member (190) comprises a spline hole (191) extending the entire length between the two ends, and the portion of the spline hole (191) adjacent to one end is the first spline hole (191A), and the portion of the spline hole (191) adjacent to the other end is the second spline hole (191B).

12. The outboard motor (100) according to any one of claims 1 to 6, wherein one of the propeller shaft (140) and the pump shaft (212) incudes a third coupling portion (320A), and the other comprises a third coupling receiving portion (330A) that is coupled to the third coupling portion (320A).

13. The outboard motor (100) according to claim 12, wherein one of the third coupling portion (320A) and the third coupling receiving portion (330A) is a third spline shaft (320A) extending along the rotation axis (Apr) of the propeller shaft (140) and the other is a third spline hole (330A) receiving the third spline shaft (320A).

14. The outboard motor (100) according to claim 13, wherein the pump shaft (212) comprises the third spline shaft (320A), and the propeller shaft (140) comprises the third spline hole (330A).

15. A boat (1) having a hull (10) and an outboard motor (100) according to any one of claims 1 to 14 attached to a transom (14) positioned at a rear end of the hull (10).
